# EUROPÄISCHE PATENTSCHRIFT

(11) **EP 3 050 163 B1**
(45) Veröffentlichungstag und Bekanntmachung des Hinweises auf die Patenterteilung: **26.08.2020**
(21) Anmeldenummer: 14771901.7
(22) Anmeldetag: 23.09.2014
(51) Int. Cl.: B23K 20/10, B23K 101/38, H01R 4/18, H01R 4/62, H01R 43/02, H01R 43/048

(54) **VERFAHREN ZUM HERSTELLEN EINER ELEKTRISCH LEITENDEN VERBINDUNG ZWISCHEN EINER ELEKTRISCHEN LEITUNG UND EINEM ELEKTRISCH LEITENDEN BAUTEIL**
METHOD FOR ESTABLISHING AN ELECTRICALLY CONDUCTIVE CONNECTION BETWEEN AN ELECTRICAL LINE AND AN ELECTRICALLY CONDUCTIVE COMPONENT
PROCÉDÉ DE RÉALISATION D'UN ASSEMBLAGE ÉLECTRIQUEMENT CONDUCTEUR ENTRE UN CÂBLE ÉLECTRIQUE ET UN COMPOSANT ÉLECTRIQUEMENT CONDUCTEUR

(30) Priorität: 24.09.2013 DE 102013219150
(43) Veröffentlichungstag der Anmeldung: 03.08.2016
(60) Teilanmeldung: 20186033.5
(73) Patentinhaber: ElringKlinger AG, 72581 Dettingen (DE)
(72) Erfinder: KERN, Stephanie, 72760 Reutlingen (DE)
(74) Vertreter: Hoeger, Stellrecht & Partner Patentanwälte mbB
(86) Internationale Anmeldenummer: PCT/EP2014/070256
(87) Internationale Veröffentlichungsnummer: WO 2015/044140

(56) Entgegenhaltungen:
- EP-A1- 2 362 491
- DE-A1- 3 017 364
- DE-A1- 10 007 258
- DE-A1-102010 035 424
- DE-A1-102011 089 206
- DE-B4- 10 336 408
- FR-A1- 2 501 923
- US-A- 3 314 582
- US-A- 3 717 842
- US-B2- 8 448 836

## Beschreibung

Die vorliegende Erfindung betrifft ein Verfahren zum Herstellen einer elektrisch leitenden Verbindung zwischen einer elektrischen Leitung, die mehrere Einzelleiter umfasst, und einem elektrisch leitenden Bauteil.

Bei einem bekannten Verfahren dieser Art werden Aluminiumlitzen einer elektrischen Leitung mit einem vernickelten und versilberten Kupferschwert durch Ultraschallschweißung verbunden.

Hierbei besteht das Problem, dass die Verbindung zwischen den Aluminiumlitzen und dem Kupferschwert unter dem Einfluss von Luftfeuchtigkeit und/oder NaCI-Lösung korrodiert, so dass die Zugfestigkeit der Verbindung durch Korrosion stark absinkt.

Die US 3 717 842 A offenbart ein Verfahren gemäß dem Oberbegriff von Anspruch 1.

Der vorliegenden Erfindung liegt die Aufgabe zugrunde, ein Verfahren zum Herstellen einer elektrisch leitenden Verbindung zwischen einer elektrischen Leitung, die mehrere Einzelleiter umfasst, und einem elektrisch leitenden Bauteil zu schaffen, welches einfach und vorzugsweise ohne Verwendung eines zusätzlichen Korrosionsschutzes durchführbar ist und dennoch zu einer korrosionsbeständigen Verbindung zwischen den Einzelleitern der elektrischen Leitung und dem elektrisch leitenden Bauteil führt.

Diese Aufgabe wird durch ein Verfahren nach Anspruch 1 gelöst.

Der vorliegenden Erfindung liegt das Konzept zugrunde, eine mechanische Fixierung der Einzelleiter durch das Vercrimpen mit einer verbesserten Kompaktierung der Einzelleiter beim Crimpen und beim Ultraschallschweißvorgang zu kombinieren.

Durch die Crimpung und den anschließenden Ultraschallschweißvorgang werden die Einzelleiter so stark kompaktiert, dass die Gesamtheit der Einzelleiter einem Vollmaterial nahekommt. Die Korrosion findet an den so kompaktierten Einzelleitern nicht genügend Angriffsfläche, um die Verbindungsstelle entscheidend zu schädigen.

Die zusätzliche mechanische Sicherung und/oder Fixierung der Einzelleiter durch die Crimpung verhindert zusätzlich, dass die Einzelleiter sich aus der Verbindung mit dem elektrisch leitenden Bauteil lösen können, selbst wenn dennoch ein korrosives Geschehen stattfindet.

Bei der Crimpung, das heißt beim Erzeugen des die Einzelleiter abschnittsweise umschließenden Crimpelements, werden die Einzelleiter vorzugsweise vor dem Ultraschallschweißvorgang vollständig durch das Crimpelement umschlossen.

Hierdurch wird eine ungleichmäßige Verteilung der Einzelleiter und somit eine ungleichmäßige Verpressung beim Ultraschallschweißvorgang vermieden.

Die vorzugsweise vor dem Ultraschallschweißvorgang durchgeführte Crimpung bringt die Einzelleiter in eine definierte Form, was zu höherer Prozesssicherheit beim anschließenden Ultraschallschweißvorgang führt.

Durch die bessere Kompaktierung der Einzelleiter und die deutlich verbesserte mechanische Fixierung durch das Crimpen kann erreicht werden, dass die Verbindung zwischen der elektrischen Leitung und dem elektrisch leitenden Bauteil eine höhere Festigkeit aufweist und nicht durch ein Lösen der Ultraschallschweißverbindung, sondern allenfalls durch ein Materialversagen der Einzelleiter unterbrochen wird. Es reißen also eher die Einzelleiter hinter der Schweißung ab, bevor die Verbindung sich an der Schweißstelle selbst löst.

Die Ausgangswerte für die Zugfestigkeit der Verbindung zwischen der elektrischen Leitung und dem elektrisch leitenden Bauteil sind schon unmittelbar nach der Herstellung der elektrisch leitenden Verbindung deutlich höher als bei bekannten Verbindungsverfahren. Da die Zugfestigkeit der Verbindung nicht mehr durch das Versagen der Schweißstelle, sondern durch das Materialversagen der Einzelleiter bestimmt wird, wird die Prozessfähigkeit deutlich erhöht, da die Einzelleiter stets bei ähnlichen Werten der Zugbelastung reißen.

Durch das Umschließen mit dem Crimpelement und die Verschweißung zumindest eines Teils der Einzelleiter mit dem Crimpelement werden die Einzelleiter geschützt. Ferner wird ein Einschnüren der Einzelleiter während des Ultraschallschweißvorgangs vermieden, welches zu einem leichteren Abreißen der Einzelleiter führen könnte. Bei dem erfindungsgemäßen Verfahren werden somit an den Einzelleitern keine Sollbruchstellen erzeugt.

Durch den höheren Kompaktierungsgrad und das vollständige Umschließen der Schweißstelle mit dem Material des Crimpelements wird die Angriffsfläche für die Korrosion deutlich reduziert, was die Korrosionsbeständigkeit der so hergestellten Verbindung deutlich erhöht.

Insbesondere kann eine nach dem erfindungsgemäßen Verfahren hergestellte Verbindungsstelle zwischen der elektrischen Leitung und dem elektrisch leitenden Bauteil ohne Aufbringen von Korrosionsschutzmedien auf die Verbindungsstelle eingesetzt werden.

Bei einer bevorzugten Ausgestaltung des erfindungsgemäßen Verfahrens ist vorgesehen, dass die Sonotrode von dem Crimp-Werkzeug verschieden ist.

Der Crimpvorgang und der Ultraschallschweißvorgang werden also vorzugsweise nacheinander, in verschiedenen Werkzeugen, durchgeführt.

Vorzugsweise wird der Ultraschallschweißvorgang erst nach der Erzeugung des Crimpelements begonnen.

Bei einer bevorzugten Ausgestaltung der Erfindung ist vorgesehen, dass die Einzelleiter sowohl mittels des Crimp-Werkzeugs als auch mittels der Sonotrode des Ultraschallschweißwerkzeugs kompaktiert werden.

Das zwischen den Einzelleitern der elektrischen Leitung im Bereich des Crimpelements verbleibende Zwischenraumvolumen nimmt also beim Crimpvorgang ab und wird beim Ultraschallschweißvorgang weiter reduziert.

Eine gute Kompaktierung der Einzelleiter wird insbesondere erzielt, wenn der Schweißdruck der Sonotrode zumindest zeitweise mindestens ungefähr 3 bar, insbesondere mindestens ungefähr 4 bar, beispielsweise mindestens ungefähr 5 bar, beträgt.

Als besonders günstig hat sich in Versuchen ein Schweißdruck von ungefähr 5 bar erwiesen.

Ferner hat es sich für die Kompaktierung der Einzelleiter als günstig erwiesen, wenn die Schweißzeit des Ultraschallschweißvorgangs mindestens ungefähr 1,0 Sekunden, vorzugsweise mindestens ungefähr 1,5 Sekunden, insbesondere mindestens ungefähr 3 Sekunden, beträgt.

Die Schweißzeit des Ultraschallschweißvorgangs ist insbesondere die Zeit, die benötigt wird, um das Crimpelement, welches die Einzelleiter umschließt, auf eine vorgegebene Endhöhe (sogenannte Endknotenhöhe) zu verformen (beispielsweise auf eine Endknotenhöhe von 7,5 mm).

Grundsätzlich könnte vorgesehen sein, dass die Crimpelement-Vorform ein von dem elektrisch leitenden Bauteil separat hergestelltes Bauelement ist.

Bei einer bevorzugten Ausgestaltung der Erfindung ist jedoch vorgesehen, dass die Crimpelement-Vorform einstückig mit dem elektrisch leitenden Bauteil ausgebildet ist.

Die Crimpelement-Vorform und/oder das daraus gebildete Crimpelement weisen vorzugsweise eine Materialstärke von mindestens ungefähr 1 mm, insbesondere mindestens ungefähr 1,5 mm, beispielsweise mindestens ungefähr 1,8 mm, auf.

Beispielsweise kann die Crimpelement-Vorform und/oder das daraus gebildete Crimpelement ein, vorzugsweise beschichtetes, Kupfermaterial mit einer Materialstärke von ungefähr 1,8 mm umfassen.

Um ein unerwünschtes Aufbiegen des Crimpelements zu verhindern, ist es günstig, wenn die Crimpelement-Vorform und/oder das elektrisch leitende Bauteil ein metallisches Material mit einer Zugfestigkeit Rₘ von mehr als 250 N/mm², vorzugsweise von mehr als 300 N/mm², insbesondere von mehr als 350 N/mm², umfasst.

Beispielsweise kann die Crimpelement-Vorform und/oder das elektrisch leitende Bauteil ein Kupfermaterial mit einer Zugfestigkeit von mindestens ungefähr 360 N/mm² umfassen.

Bei einer bevorzugten Ausgestaltung der Erfindung ist vorgesehen, dass die Crimpelement-Vorform und/oder das elektrisch leitende Bauteil Kupfer umfasst, vorzugsweise als Hauptbestandteil.

Als Hauptbestandteil eines Materials gilt dabei derjenige Bestandteil, welcher den höchsten Gewichtsanteil an dem Material aufweist.

Insbesondere kann vorgesehen sein, dass die Crimpelement-Vorform und/oder das elektrisch leitende Bauteil aus Kupfer oder einer Kupferlegierung gebildet sind.

Ferner hat es sich als günstig erwiesen, wenn die Crimpelement-Vorform und/oder das elektrisch leitende Bauteil eine Beschichtung aufweist, welche Nickel und/oder Silber umfasst.

Die Einzelleiter können grundsätzlich aus jedem Material gebildet sein, welches eine ausreichende elektrische Leitfähigkeit aufweist.

Bei einer bevorzugten Ausgestaltung der Erfindung ist vorgesehen, dass die Einzelleiter Aluminium umfassen, insbesondere als Hauptbestandteil.

Beispielsweise kann vorgesehen sein, dass die Einzelleiter aus Aluminium oder aus einer Aluminiumlegierung gebildet sind.

Günstig ist es, wenn die Crimpelement-Vorform aus einem Material gebildet ist, welches eine höhere mechanische Festigkeit aufweist als das Material, aus dem zumindest ein Teil der mittels des Crimpelements gecrimpten Einzelleiter gebildet ist. Hierdurch kann insbesondere erreicht werden, dass eine ausreichend hohe Schweißenergie beim Ultraschallschweißvorgang in das Material der Einzelleiter einbringbar ist.

Beispielsweise kann vorgesehen sein, dass das Material, aus dem die Crimpelement-Vorform gebildet ist, eine höhere Zugfestigkeit, eine höhere Streckgrenze und/oder einen höheren Elastizitätsmodul aufweist als das Material, aus dem zumindest ein Teil der Einzelleiter gebildet ist.

Vorzugsweise beträgt die Zugfestigkeit des Materials, aus dem die Crimpelement-Vorform gebildet ist, mindestens das Doppelte, insbesondere mindestens das Dreifache, der Zugfestigkeit des Materials, aus dem zumindest ein Teil der Einzelleiter gebildet ist.

Ferner beträgt vorzugsweise die Streckgrenze des Materials, aus dem die Crimpelement-Vorform gebildet ist, mindestens das Doppelte, insbesondere mindestens das Fünffache, besonders bevorzugt mindestens das Zehnfache, der Streckgrenze des Materials, aus dem zumindest ein Teil der Einzelleiter gebildet ist.

Das Material, aus dem die Crimpelement-Vorform gebildet ist, kann beispielsweise das Kupfermaterial mit der Bezeichnung Cu R360 nach EN 13599 sein, welches eine Zugfestigkeit von 360 MPa und eine Streckgrenze von 320 MPa aufweist.

Das Material, aus dem zumindest ein Teil der mittels des Crimpelements gecrimpten Einzelleiter, insbesondere alle der mittels des Crimpelements gecrimpten Einzelleiter, gebildet ist, kann beispielsweise das Aluminiummaterial mit der Bezeichnung AW-AI 99,5 nach EN 573/485 sein, welches eine Zugfestigkeit von 65 bis 95 MPa und eine Streckgrenze von 20 MPa aufweist.

Das erfindungsgemäße Verfahren eignet sich insbesondere zur Herstellung einer elektrisch leitenden Verbindung zwischen einer elektrischen Leitung mit einem relativ großen Leitungsquerschnitt und einem elektrisch leitenden Bauteil.

Es ist vorgesehen, dass die gesamte Querschnittsfläche der Einzelleiter der elektrischen Leitung im Bereich des Crimpelements, insbesondere nach der Herstellung der elektrisch leitenden Verbindung, mehr als 50 mm², insbesondere mehr als 55 mm², beispielsweise ungefähr 59 mm², beträgt.

Für eine besonders gute Kompaktierung der Einzelleiter beim Ultraschallschweißvorgang hat es sich als günstig erwiesen, wenn die Sonotrode eine Kontaktfläche mit einer Längsrichtung aufweist, wobei die Längsrichtung der Kontaktfläche während des Ultraschallschweißvorgangs mit freien Rändern des Crimpelements einen Winkel von mehr als 45°, vorzugsweise einen Winkel von mehr als 60°, insbesondere einen Winkel von ungefähr 90°, einschließt.

Ferner ist es günstig, wenn das elektrisch leitende Bauteil einen Schweißbereich, an dem zumindest ein Teil der Einzelleiter der elektrischen Leitung festgelegt wird, und einen Kontaktbereich umfasst, wobei der Kontaktbereich über einen abgekanteten Bereich mit dem Schweißbereich verbunden ist.

Insbesondere kann vorgesehen sein, dass der Kontaktbereich über eine Abkantung um einen Winkel von mehr als 45°, vorzugsweise um einen Winkel von mehr als 60°, beispielsweise um einen Winkel von ungefähr 90°, mit dem Schweißbereich verbunden ist.

Der abgekantete Bereich kann sich längs einer Abkantlinie erstrecken, welche im Wesentlichen parallel zu einer Querrichtung des Crimpelements gerichtet ist.

Alternativ hierzu kann auch vorgesehen sein, dass der abgekantete Bereich sich längs einer Abkantlinie erstreckt, welche quer zu der Querrichtung des Crimpelements gerichtet ist.

Insbesondere kann vorgesehen sein, dass die Abkantlinie mit der Querrichtung des Crimpelements einen Winkel von mindestens ungefähr 10°, insbesondere von mindestens ungefähr 20°, einschließt.

Ferner ist vorzugsweise vorgesehen, dass die Abkantlinie mit der Querrichtung des Crimpelements einen Winkel von höchstens ungefähr 60°, insbesondere von höchstens ungefähr 45°, einschließt.

Bei einer besonderen Ausgestaltung der Erfindung ist vorgesehen, dass nicht nur eine elektrische Leitung, sondern mehrere elektrische Leitungen, insbesondere zwei elektrische Leitungen, mit dem elektrisch leitenden Bauteil elektrisch leitend verbunden werden, wobei ein die Einzelleiter mehrerer elektrischer Leitungen abschnittsweise umschließendes Crimpelement aus einer Crimpelement-Vorform erzeugt wird.

Ferner kann vorgesehen sein, dass das elektrisch leitende Bauteil, mit dem eine oder mehrere elektrische Leitungen elektrisch leitend verbunden werden, ein elektrisches Leitungselement umfasst, welches seinerseits mehrere Einzelleiter oder Litzen umfasst.

Dabei ist vorzugsweise vorgesehen, dass das Crimpelement die Einzelleiter des elektrischen Leitungselements abschnittsweise umschließt.

Insbesondere umschließt das Crimpelement in diesem Fall also sowohl die Einzelleiter der einen elektrischen Leitung oder der mehreren elektrischen Leitungen als auch die Einzelleiter des elektrischen Leitungselements.

Vorzugsweise ist dabei vorgesehen, dass die Einzelleiter der einen elektrischen Leitung oder der mehreren elektrischen Leitungen einerseits und die Einzelleiter des elektrischen Leitungselements andererseits einander in der Längsrichtung des Crimpelements überlappen.

Bei einer besonderen Ausgestaltung der Erfindung kann vorgesehen sein, dass die Einzelleiter des elektrischen Leitungselements aus einem Material gebildet sind, das von dem Material der Einzelleiter der einen elektrischen Leitung oder der mehreren elektrischen Leitungen verschieden ist.

So kann beispielsweise vorgesehen sein, dass die Einzelleiter des elektrischen Leitungselements Aluminium umfassen und die Einzelleiter der einen elektrischen Leitung oder der mehreren elektrischen Leitungen Kupfer umfassen.

Alternativ hierzu kann auch vorgesehen sein, dass der Kontaktbereich ohne Abkantung in den Schweißbereich übergeht.

Das elektrisch leitende Bauteil kann insbesondere als ein Modulverbinder einer elektrochemischen Vorrichtung ausgebildet sein.

Die elektrochemische Vorrichtung kann insbesondere als ein Akkumulator, insbesondere als ein Lithium-Ionen-Akkumulator, ausgebildet sein.

Die vorliegende Erfindung betrifft ferner eine Baugruppe, welche eine elektrische Leitung, die mehrere Einzelleiter umfasst, und ein mit der elektrischen Leitung verbundenes elektrisch leitendes Bauteil umfasst.

Der vorliegenden Erfindung liegt die weitere Aufgabe zugrunde, eine solche Baugruppe so auszubilden, dass sie einfach montierbar ist und dennoch eine hohe Korrosionsbeständigkeit aufweist.

Diese Aufgabe wird durch eine Baugruppe nach Anspruch 15 gelöst.

Eine solche Baugruppe ist durch das vorstehend beschriebene erfindungsgemäße Verfahren hergestellt. Weitere Merkmale und Vorteile der Erfindung sind Gegenstand der nachfolgenden Beschreibung und der zeichnerischen Darstellung eines Ausführungsbeispiels.

In den Zeichnungen zeigen:
- Fig. 1: eine schematische perspektivische Darstellung einer Baugruppe, welche eine elektrische Leitung mit mehreren Einzelleitern, ein die Einzelleiter abschnittsweise umschließendes Crimpelement und ein durch Ultraschallschweißen mit zumindest einem Teil der Einzelleiter verbundenes elektrisch leitendes Bauteil umfasst;
- Fig. 2: eine aus einem ebenen Ausgangsmaterial herausgetrennte Bauelement-Vorform;
- Fig. 3: eine perspektivische Darstellung des elektrisch leitenden Bauteils mit einer Crimpelement-Vorform;
- Fig. 4: eine Seitenansicht des elektrisch leitenden Bauteils mit der Crimpelement-Vorform;
- Fig. 5: eine Vorderansicht des elektrisch leitenden Bauteils mit der Crimpelement-Vorform, mit der Blickrichtung in Richtung des Pfeiles 5 in Fig. 4;
- Fig. 6: eine perspektivische Darstellung eines Crimp-Werkzeugs, welches ein Werkzeugoberteil, ein Werkzeugunterteil und ein Positionierelement umfasst;
- Fig. 7: eine Darstellung des Crimp-Werkzeugs und der Crimpelement-Vorform des elektrisch leitenden Bauteils vor einem Crimpvorgang zum Erzeugen eines Crimpelements aus der Crimpelement-Vorform;
- Fig. 8: eine der Fig. 7 entsprechende Darstellung des Crimp-Werkzeugs und des Crimpelements nach dem Crimpvorgang, durch welchen das Crimpelement aus der Crimpelement-Vorform erzeugt worden ist;
- Fig. 9: eine perspektivische Darstellung des elektrisch leitenden Bauteils mit dem Crimpelement;
- Fig. 10: eine Seitenansicht des elektrisch leitenden Bauteils mit dem Crimpelement;
- Fig. 11: eine Vorderansicht des elektrisch leitenden Bauteils mit dem Crimpelement, mit der Blickrichtung in Richtung des Pfeiles 11 in Fig. 10;
- Fig. 12: eine perspektivische Darstellung einer Sonotrode, eines Ambosses und der elektrischen Leitung mit mehreren Einzelleitern, die abschnittsweise von dem Crimpelement des elektrisch leitenden Bauteils umschlossen sind;

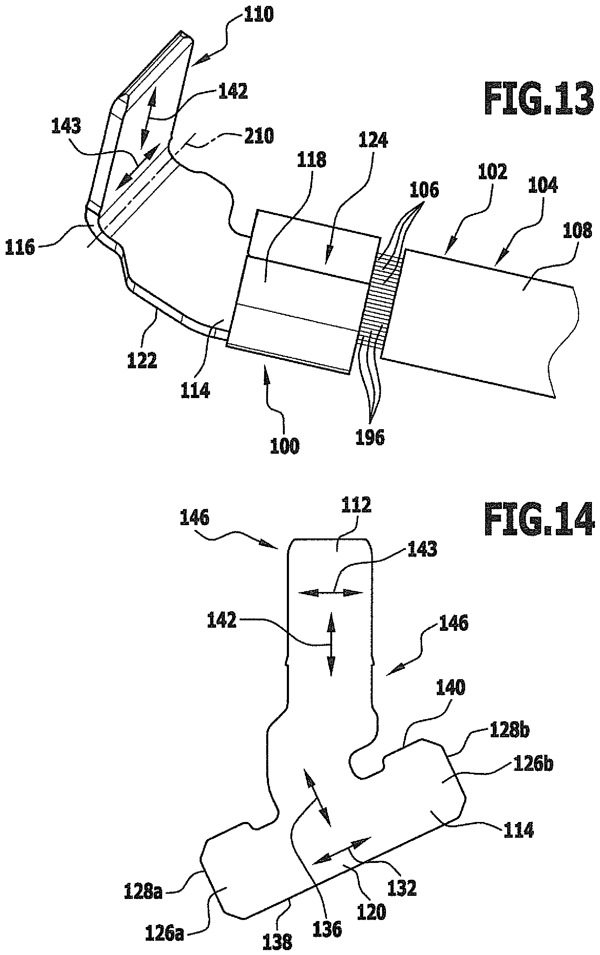

- Fig. 13: eine schematische perspektivische Darstellung einer zweiten Ausführungsform einer Baugruppe, welche eine elektrische Leitung mit mehreren Einzelleitern, ein die Einzelleiter abschnittsweise umschließendes Crimpelement und ein durch Ultraschallschweißen mit zumindest einem Teil der Einzelleiter verbundenes elektrisch leitendes Bauteil umfasst, wobei das elektrisch leitende Bauteil einen Schweißbereich, an dem zumindest ein Teil der Einzelleiter der elektrischen Leitungen festgelegt ist, und einen Kontaktbereich umfasst, der über einen abgekanteten Bereich mit dem Schweißbereich verbunden ist, und wobei der abgekantete Bereich sich längs einer Abkantlinie erstreckt, welche quer zu einer Querrichtung des Crimpelements gerichtet ist;
- Fig. 14: eine aus einem ebenen Ausgangsmaterial herausgetrennte Bauelement-Vorform der zweiten Ausführungsform der Baugruppe;
- Fig. 15: eine perspektivische Darstellung des elektrisch leitenden Bauteils mit einer Crimpelement-Vorform bei der zweiten Ausführungsform der Baugruppe;
- Fig. 16: eine Draufsicht von oben auf das elektrisch leitende Bauteil mit der Crimpelement-Vorform bei der zweiten Ausführungsform der Baugruppe;

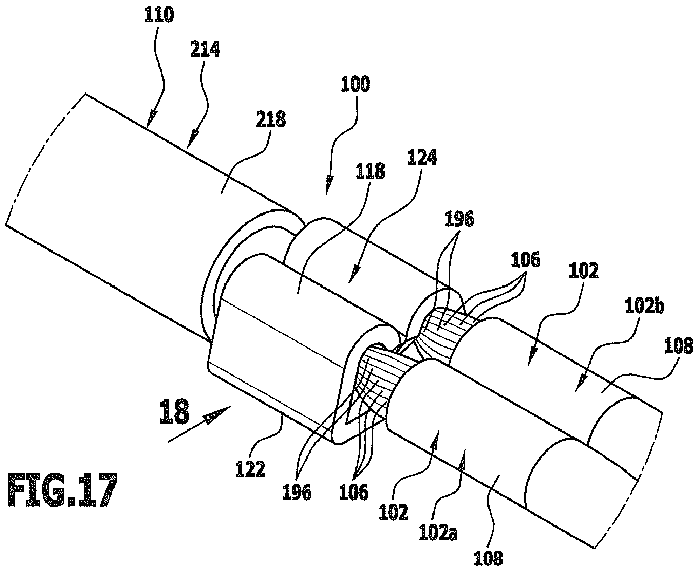

- Fig. 17: eine schematische perspektivische Darstellung einer dritten Ausführungsform einer Baugruppe, welche zwei elektrische Leitungen mit jeweils mehreren Einzelleitern, ein elektrisches Leitungselement mit mehreren Einzelleitern als elektrisch leitendes Bauteil und ein sowohl die Einzelleiter der elektrischen Leitungen als auch die Einzelleiter des elektrischen Leitungselements abschnittsweise umschließendes Crimpelement umfasst, wobei zumindest ein Teil der Einzelleiter der elektrischen Leitungen mit zumindest einem Teil der Einzelleiter des elektrischen Leitungselements durch Ultraschallschweißen verbunden ist;
- Fig. 18: eine Seitenansicht der Baugruppe aus Fig. 17, mit der Blickrichtung in Richtung des Pfeiles 18 in Fig. 17;
- Fig. 19: einen Querschnitt durch das Crimpelement der Baugruppe aus Fig. 18 und die abschnittsweise von dem Crimpelement umschlossenen Einzelleiter der elektrischen Leitungen und des elektrischen Leitungselements, längs der Linie 19 - 19 in Fig. 18;
- Fig. 20: eine aus einem ebenen Ausgangsmaterial herausgetrennte Crimpelement-Ausgangsform;
- Fig. 21: eine perspektivische Darstellung einer Crimpelement-Vorform der dritten Ausführungsform der Baugruppe, welche aus der in Fig. 20 dargestellten, im Wesentlichen ebenen Crimpelement-Ausgangsform dadurch erzeugt worden ist, dass Randbereiche des späteren Crimpelements aus der Ebene der geschlossenen Seite des Crimpelements herausgebogen worden sind; und
- Fig. 22: eine Vorderansicht der Crimpelement-Vorform aus Fig. 21, mit der Blickrichtung in Richtung des Pfeiles 22 in Fig. 21.

Gleiche oder funktional äquivalente Elemente sind in allen Figuren mit denselben Bezugszeichen bezeichnet.

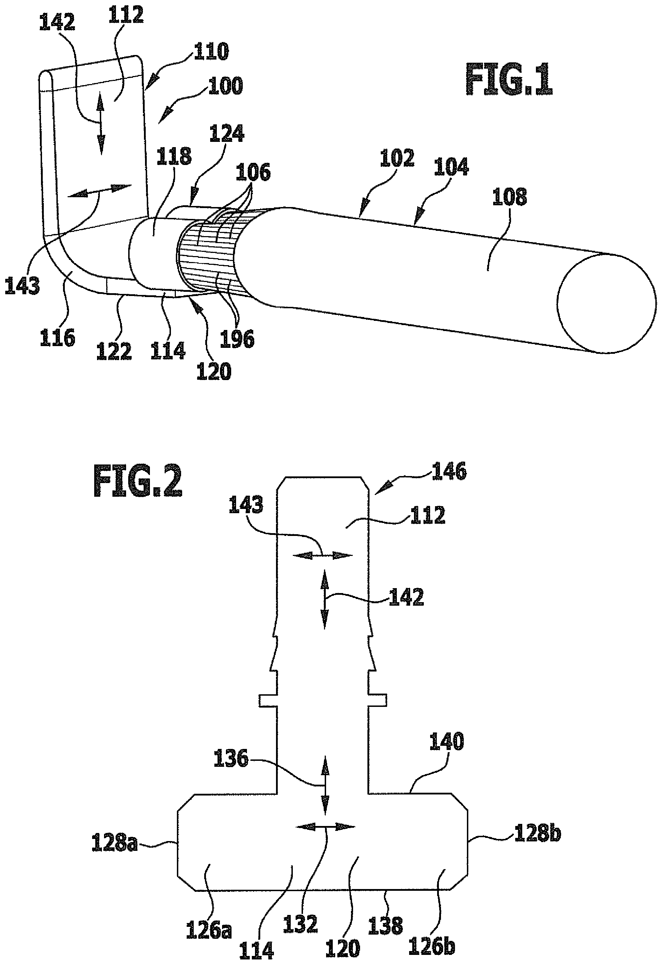

Eine in Fig. 1 dargestellte, als Ganzes mit 100 bezeichnete Baugruppe umfasst eine elektrische Leitung 102 in Form eines Kabels 104, welche eine Vielzahl von Litzen oder Einzelleitern 106 und eine elektrisch isolierende Umhüllung 108 umfasst, sowie ein elektrisch leitendes Bauteil 110, das einen im Wesentlichen plattenförmigen Kontaktbereich 112 und einen Schweißbereich 114 umfasst, welche über einen gebogenen oder abgekanteten Bereich 116, vorzugsweise einstückig, miteinander verbunden sind.

In dem Schweißbereich 114 ist zumindest ein Teil der Einzelleiter 106 der elektrischen Leitung 102 durch Ultraschallschweißung mit dem elektrisch leitenden Bauteil 110 elektrisch leitend verbunden.

Der Schweißbereich 114 umfasst ein Crimpelement 118, welches die Einzelleiter 106 abschnittsweise umschließt. Insbesondere umschließt das Crimpelement 118 nicht mit der Umhüllung 108 versehene Endabschnitte 196 der Einzelleiter 106.

Das Crimpelement 118 weist eine geschlossene Seite 120 mit einer durchgehenden, im Wesentlichen ebenen Anlagefläche 122 und eine der geschlossenen Seite 120 gegenüberliegende, im Folgenden als offene Seite 124 bezeichnete Seite auf, an welcher gekrümmte Randbereiche 126a und 126b des Crimpelements 118 einander gegenüberliegen.

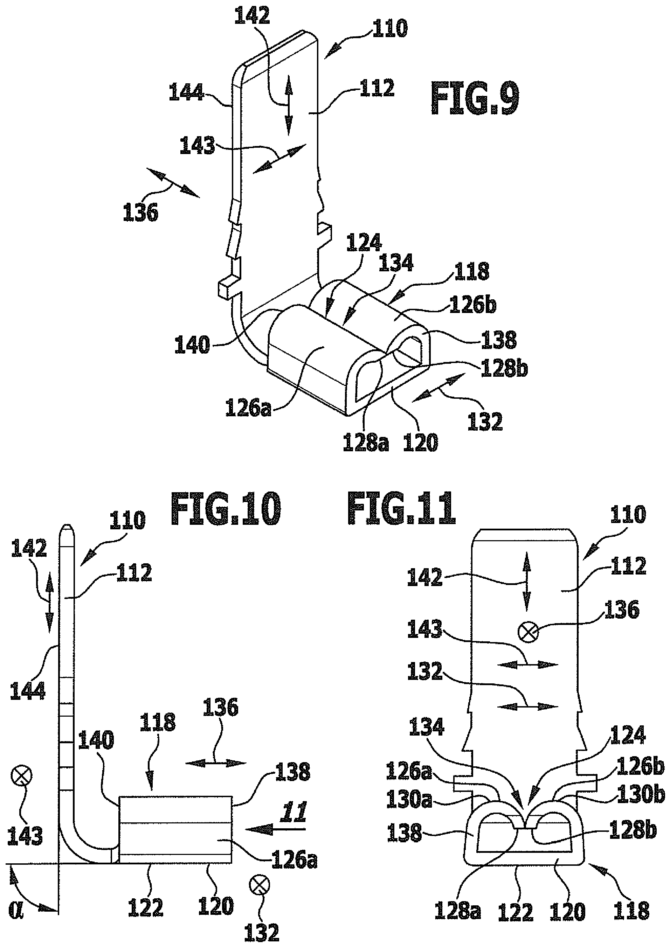

Vorzugsweise ist dabei vorgesehen, dass freie Ränder 128a und 128b der Randbereiche 126a beziehungsweise 126b des Crimpelements 118 in einem kleinen Abstand voneinander enden oder einander berühren (siehe die Fig. 9 bis 11, in welchen das elektrisch leitende Bauteil 110 mit dem Crimpelement 118, aber ohne die von dem Crimpelement 118 umschlossenen Einzelleiter 106 der elektrischen Leitung 102 dargestellt sind).

Die der geschlossenen Seite 120 des Crimpelements 118 abgewandten Kuppen 130a, 130b (siehe Fig. 11) der Randbereiche 126a beziehungsweise 126b sind in einer Querrichtung 132 des Crimpelements 118 durch eine dazwischenliegende Vertiefung 134 voneinander beabstandet.

Den Grund der Vertiefung 134 bilden beispielsweise die freien Ränder 128a, 128b der Randbereiche 126a beziehungsweise 126b des Crimpelements 118.

Die Querrichtung 132 des Crimpelements 118 ist senkrecht zu einer Längsrichtung 136 des Crimpelements 118 ausgerichtet, welche im Wesentlichen parallel zur Längsrichtung der elektrischen Leitung 102 und im Wesentlichen parallel zu den freien Rändern 128a und 128b des Crimpelements 118 verläuft.

Die seitlichen freien Ränder 128a, 128b des Crimpelements 118 verbinden einen vorderen Rand 138 mit einem hinteren Rand 140 des Crimpelements 118.

Das elektrisch leitende Bauteil 110 einschließlich des Crimpelements 118 ist aus einem elektrisch leitenden metallischen Material gebildet.

Vorzugsweise umfasst das elektrisch leitende Bauteil 110 einschließlich des Crimpelements 118 ein metallisches Material mit einer Zugfestigkeit Rₘ von mehr als 250 N/mm², insbesondere von mehr als 300 N/mm², beispielsweise von mehr als 350 N/mm².

Ferner ist vorzugsweise vorgesehen, dass das elektrisch leitende Bauteil 110 einschließlich des Crimpelements 118 Kupfer umfasst, vorzugsweise als Hauptbestandteil.

Als Hauptbestandteil eines Bauteils gilt dabei dasjenige Material, welches den größten Gewichtsanteil an dem betreffenden Bauteil aufweist.

Insbesondere kann das elektrisch leitende Bauteil 110 einschließlich des Crimpelements 118 ein Kupfermaterial mit einer Zugfestigkeit von mindestens ungefähr 360 N/mm² umfassen.

Das elektrisch leitende Bauteil 110 einschließlich des Crimpelements 118 weist vorzugsweise eine Beschichtung auf.

Eine solche Beschichtung kann insbesondere Nickel und/oder Silber umfassen.

Die Einzelleiter 106 der elektrischen Leitung 102 können grundsätzlich aus jedem Material gebildet sein, das eine ausreichende elektrische Leitfähigkeit aufweist.

Insbesondere kann vorgesehen sein, dass die Einzelleiter 106 Aluminium umfassen, insbesondere aus Aluminium oder einer Aluminiumlegierung gebildet sind.

Das elektrisch leitende Bauteil 110 kann beispielsweise als ein Kontaktschuh eines Modulverbinders einer elektrochemischen Vorrichtung ausgebildet sein.

Der Kontaktbereich 112 des elektrisch leitenden Bauteils 110 erstreckt sich vorzugsweise in einer Längsrichtung 142, welche insbesondere im Wesentlichen senkrecht zu der Längsrichtung 136 des Crimpelements 118 und/oder im Wesentlichen senkrecht zu der Querrichtung 132 des Crimpelements 118 ausgerichtet ist.

Eine vorzugsweise im Wesentlichen ebene Anlagefläche 144 des Kontaktbereichs 112 schließt mit der ebenen Anlagefläche 122 des Crimpelements 118 vorzugsweise einen Winkel α von mehr als 45°, insbesondere von mehr als 60°, beispielsweise von ungefähr 90°, ein.

Alternativ hierzu könnte die Anlagefläche 144 des Kontaktbereichs 112 auch im Wesentlichen parallel zu der Anlagefläche 122 des Crimpelements 118 ausgerichtet sein und insbesondere im Wesentlichen bündig mit der Anlagefläche 122 des Crimpelements 118 ausgebildet sein.

Bei der zeichnerisch dargestellten Ausführungsform des elektrisch leitenden Bauteils 110 ist eine senkrecht zur Längsrichtung 142 des Kontaktbereichs 112 und parallel zur Anlagefläche 144 des Kontaktbereichs 112 verlaufende Querrichtung 143 des Kontaktbereichs 112 im Wesentlichen parallel zu der Querrichtung 132 des Crimpelements 118 ausgerichtet.

Alternativ hierzu könnte aber auch vorgesehen sein, dass zwischen dem Kontaktbereich 112 und dem Schweißbereich 114 des elektrisch leitenden Bauteils 110 ein Zwischenbereich angeordnet ist, der an einem ersten Rand an den Schweißbereich 114 und an einem zweiten Rand an den Kontaktbereich 112 angrenzt, wobei der erste Rand und der zweite Rand nicht parallel zueinander verlaufen, sondern miteinander einen, vorzugsweise spitzen, Winkel einschließen. In diesem Fall ist dann auch die Querrichtung 143 des Kontaktbereichs 112 um diesen Winkel gegenüber der Querrichtung 132 des Crimpelements 118 verdreht.

Zur Herstellung der vorstehend beschriebenen und in den Fig. 1 sowie 9 bis 11 dargestellten Baugruppe 100 wird wie folgt vorgegangen:
Eine in Fig. 2 dargestellte Bauelement-Vorform 146 wird aus einem geeigneten Ausgangsmaterial, welches vorzugsweise eben ausgebildet ist, beispielsweise aus einem metallischen Blech, herausgetrennt, beispielsweise, vorzugsweise mittels eines Lasers, ausgeschnitten oder ausgestanzt.

In dieser Bauelement-Vorform 146 liegen die geschlossene Seite 120 sowie die Randbereiche 126a und 126b des späteren Crimpelements 118 im Wesentlichen in derselben Ebene, wobei sich die beiden Randbereiche 126a und 126b in einander entgegengesetzten Richtungen längs der Querrichtung 132 des Crimpelements 118 von der geschlossenen Seite 120 weg erstrecken.

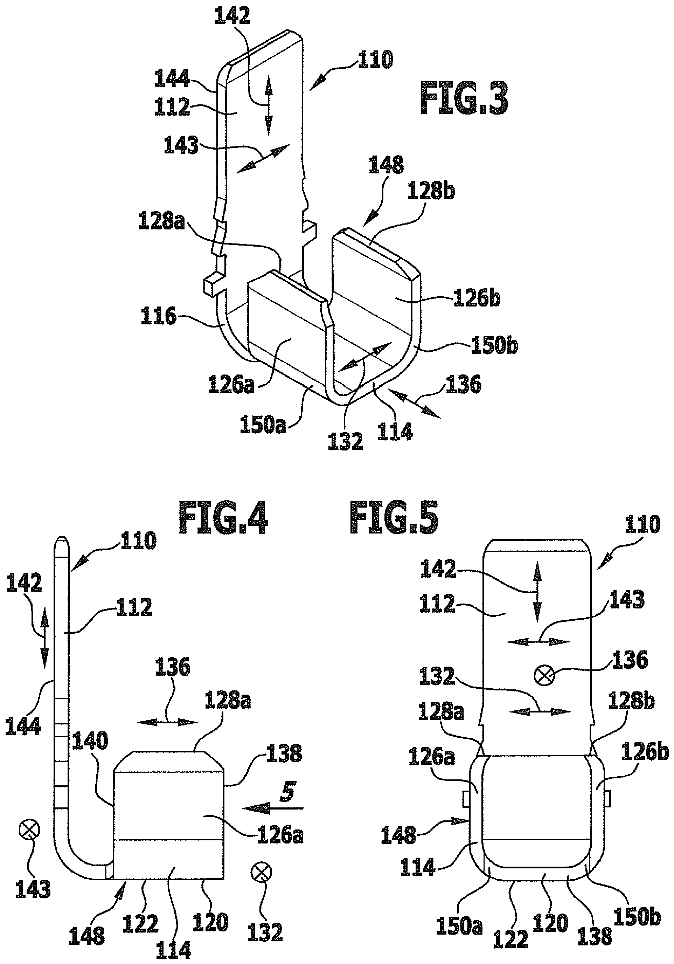

Aus der in Fig. 2 dargestellten, im Wesentlichen ebenen Bauelement-Vorform 146 wird das in den Fig. 3 bis 5 dargestellte elektrisch leitende Bauteil 110 mit Crimpelement-Vorform 148 dadurch erzeugt, dass die Randbereiche 126a und 126b sowie der Kontaktbereich 112 so aus der Ebene der geschlossenen Seite 120 herausgebogen werden, dass sie sich im Wesentlichen parallel zu der Längsrichtung 142 des Kontaktbereichs 112 und im Wesentlichen senkrecht zur Anlagefläche 122 der geschlossenen Seite 120 erstrecken.

In dieser Crimpelement-Vorform 148 sind die Randbereiche 126a und 126b über gekrümmte Bereiche 150a bzw. 150b mit der geschlossenen Seite 120 der Crimpelement-Vorform 148 verbunden.

Der Kontaktbereich 112 ist bereits in diesem Zustand über den abgekanteten Bereich 116 mit der geschlossenen Seite 120 der Crimpelement-Vorform 148 verbunden.

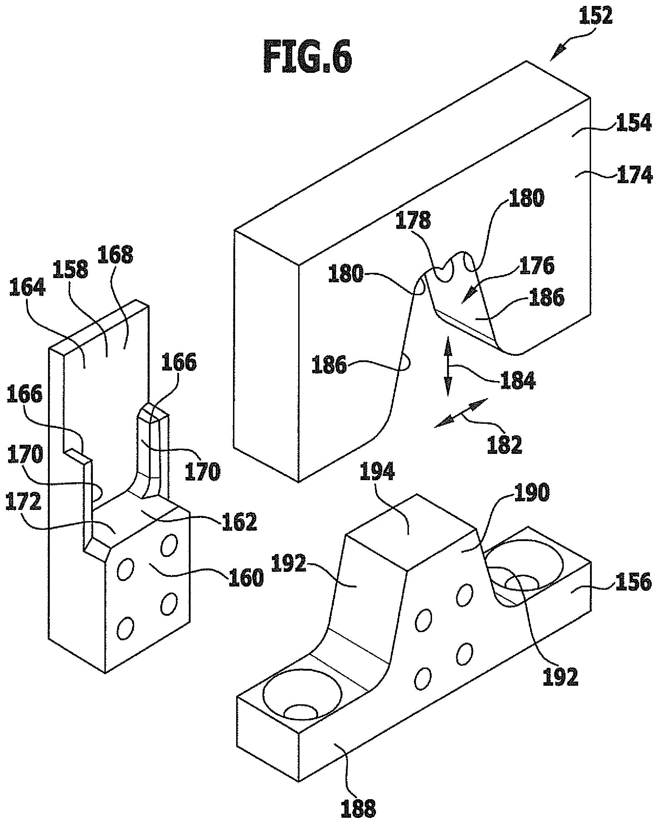

Zum Verbinden der Einzelleiter 106 der elektrischen Leitung 102 mit dem elektrisch leitenden Bauteil 110 durch Vercrimpung wird beispielsweise das in Fig. 6 dargestellte Crimp-Werkzeug 152 verwendet.

Dieses Crimp-Werkzeug 152 umfasst ein Werkzeugoberteil 154, ein Werkzeugunterteil 156 und ein Positionierelement 158.

Das Positionierelement 158 umfasst einen Sockel 160 mit einer Oberseite 162, von welcher aus sich ein hinteres Stützelement 164 und zwei seitliche Stützelemente 166 nach oben erstrecken.

Das hintere Stützelement 164 weist eine den seitlichen Stützelementen 166 zugewandte vordere Anlegefläche 168 auf, an welche die Anlagefläche 144 des Kontaktbereichs 112 des elektrisch leitenden Bauteils 110 für den Crimpvorgang, vorzugsweise im Wesentlichen flächig, anlegbar ist.

Die seitlichen Stützelemente 166 weisen an den einander zugewandten Seiten jeweils eine seitliche Anlegefläche 170 auf, an welcher sich der Kontaktbereich 112 des elektrisch leitenden Bauelements 110 während des Crimpvorgangs seitlich abstützt.

Der neben dem hinteren Stützelement 164 und den seitlichen Stützelementen 166 verbleibende Rest der Oberseite 162 des Sockels 160 des Positionierelements 158 bildet eine Auflagefläche 172, an welcher das elektrisch leitende Bauteil 110 während des Crimpvorgangs mit einem Teil der Anlagefläche 122 der Crimpelement-Vorform 148, vorzugsweise im Wesentlichen flächig, anliegt.

Das Werkzeugoberteil 154 des Crimp-Werkzeugs 152 umfasst einen, beispielsweise im Wesentlichen quaderförmigen, Block 174, welcher an seiner während des Crimpvorgangs dem Werkzeug-Unterteil 156 zugewandten Seite eine Ausnehmung 176 aufweist, die an ihrem oberen Rand durch ein Crimp-Profil 178 berandet ist, welches komplementär zu der offenen Seite 124 des fertig hergestellten Crimpelements 118 ausgebildet ist.

Insbesondere kann das Crimp-Profil 178 somit zwei im Wesentlichen halbkreis- oder halbkreisabschnittsförmige Profilabschnitte 180 umfassen, welche in einer Querrichtung 182 des Crimp-Werkzeugs 152, die mit der Querrichtung 132 des herzustellenden Crimpelements 118 übereinstimmt, nebeneinander angeordnet sind.

Das Werkzeugoberteil 154 ist relativ zu dem Werkzeugunterteil 156 längs einer Pressrichtung 184 beweglich, welche im Wesentlichen senkrecht zur Querrichtung 182 und im Wesentlichen senkrecht zur Längsrichtung 142 des herzustellenden Crimpelements 118 verläuft.

Von den einander abgewandten Rändern der Profilabschnitte 180 aus erstrecken sich geneigte Begrenzungsflächen 186 der Ausnehmung 176 in dem Werkzeugoberteil 154 in Richtung auf das Werkzeugunterteil 156.

Die geneigten Begrenzungsflächen 186 sind gegenüber der Pressrichtung 184 des Crimp-Werkzeugs 152 unter einem spitzen Winkel geneigt.

Das Werkzeugunterteil 156 umfasst einen Sockel 188, von welchem aus sich ein Amboss 190 in Richtung auf das Werkzeugoberteil 154 zu erstreckt.

Der Amboss weist zwei seitliche geneigte Begrenzungsflächen 192 auf, welche vorzugsweise unter im Wesentlichen demselben spitzen Winkel gegenüber der Pressrichtung 184 des Crimp-Werkzeugs 152 geneigt sind wie die geneigten Begrenzungsflächen 186 der Ausnehmung 176 des Werkzeugoberteils 154, und eine dem Crimp-Profil 178 des Werkzeugoberteils 154 zugewandte Auflagefläche 194, welche an die Form der Anlagefläche 122 des fertig hergestellten Crimpelements 118 angepasst ist.

Insbesondere kann also die Auflagefläche 194 im Wesentlichen eben ausgebildet sein.

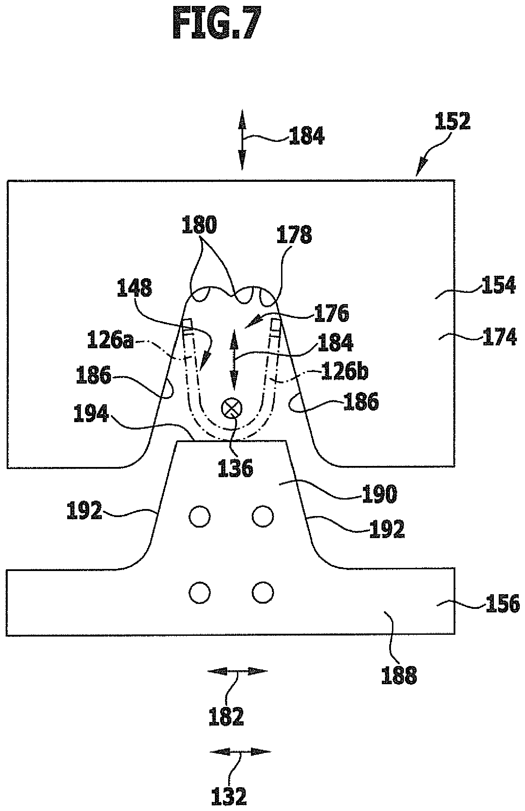

Für den Crimpvorgang, durch welchen die Einzelleiter 106 der elektrischen Leitung 102 durch Vercrimpung unter Bildung des Crimpelements 118 mit dem elektrisch leitenden Bauteil 110 verbunden werden, wird das elektrisch leitende Bauteil 110 mit der in den Fig. 3 bis 5 dargestellten Crimpelement-Vorform 148 so in das Crimp-Werkzeug 152 eingelegt, dass die Anlagefläche 144 des Kontaktbereichs 112 an der vorderen Anlegefläche 168 des Positionierelements 158 anliegt und die Anlagefläche 122 der Crimpelement-Vorform 148 an der Auflagefläche 172 des Positionierelements 158 und an der Auflagefläche 194 des Werkzeugunterteils 156 anliegt. Dabei kommt die Crimpelement-Vorform 148 im Zwischenraum zwischen dem Werkzeugunterteil 156 und dem Werkzeugoberteil 154, im Bereich der Ausnehmung 176 des Werkzeugoberteils 154, zu liegen (siehe Fig. 7).

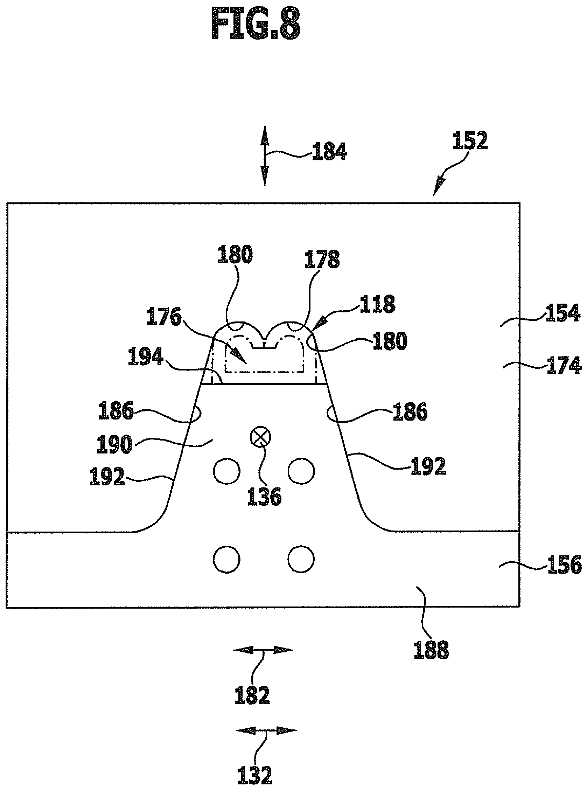

Die nicht mit der Umhüllung 108 versehenen Endabschnitte 196 der Einzelleiter 106 der elektrischen Leitung 102 werden in die Crimpelement-Vorform 148, zwischen die aufgestellten Randbereiche 126a und 126b, eingelegt (die Einzelleiter 106 sind aus Gründen der Übersichtlichkeit in den Fig. 7 und 8 nicht dargestellt).

Anschließend wird das Werkzeugoberteil 154, welches zunächst in der Pressrichtung 184 von dem Werkzeugunterteil 156 beabstandet war (siehe Fig. 7), längs der Pressrichtung 184 auf das Werkzeugunterteil 156 zu bewegt, wobei durch die geneigten Begrenzungsflächen 186 der Ausnehmung 176 und das Crimp-Profil 178 ein Verformungsdruck auf die Crimpelement-Vorform 148 übertragen wird.

Durch diesen Verformungsdruck wird die Crimpelement-Vorform 148 plastisch so verformt, dass aus der Crimpelement-Vorform 148 das in Fig. 8 dargestellte Crimpelement 118, beispielsweise mit einem im Wesentlichen B-förmigen Querschnitt, entsteht, welches komplementär zu dem Crimp-Profil 178 ausgebildet ist.

Während der Erzeugung des Crimpelements 118 aus der Crimpelement-Vorform 148 werden die Randbereiche 126a, 126b des Crimpelements 118 um die nicht mit der Umhüllung 108 versehenen Endabschnitte 196 der Einzelleiter 106 herumgebogen und so gegen die Einzelleiter 106 verpresst, dass die vom Crimpelement 118 umschlossenen Endabschnitte 196 der Einzelleiter 106 kompaktiert und kraftschlüssig miteinander verpresst werden.

Durch die Kompaktierung während des Crimpvorgangs wird das zwischen den Einzelleitern 106 verbleibende Zwischenraumvolumen der elektrischen Leitung 102 im Bereich des Crimpelements 118 verringert.

Wenn der in Fig. 8 dargestellte Endzustand erreicht ist, in welchem das Werkzeugoberteil 154 im Bereich der geneigten Begrenzungsflächen 186 an den geneigten Begrenzungsflächen 192 des Werkzeugunterteils 156 anliegt, ist der Crimpvorgang abgeschlossen.

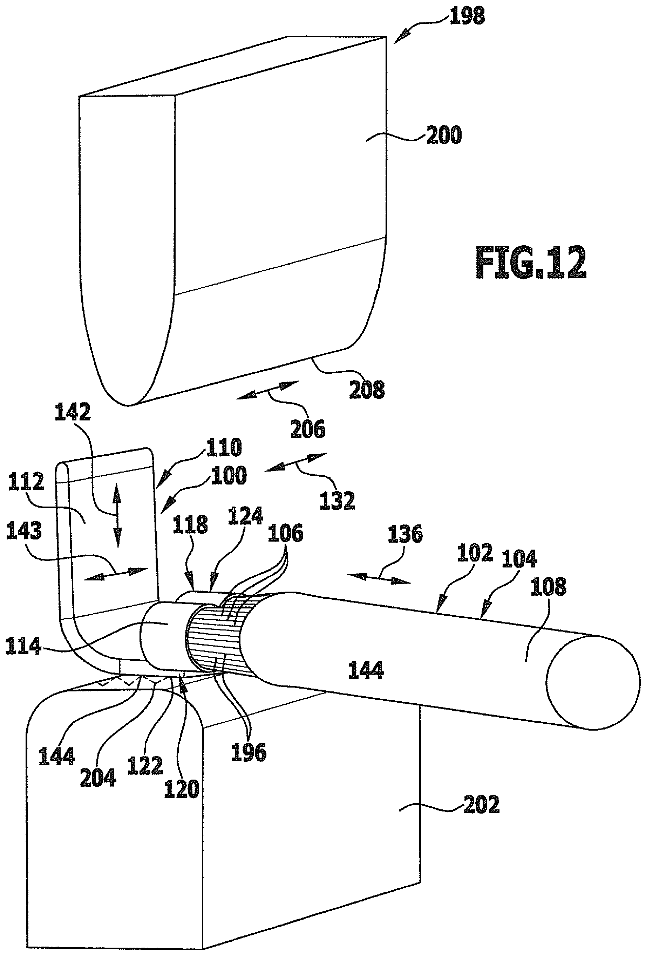

Nun wird das Crimp-Werkzeug 152 geöffnet, indem das Werkzeugoberteil 154 relativ zu dem Werkzeugunterteil 156 längs der Pressrichtung 184 von dem Werkzeugunterteil 156 weg bewegt wird, und die Baugruppe 100 mit dem elektrisch leitenden Bauteil 110 und der elektrischen Leitung 102, deren Einzelleiter 106 durch das Crimpelement 118 mit dem elektrisch leitenden Bauteil 110 verbunden sind, wird aus dem Crimp-Werkzeug 152 entnommen und in das schematisch in Fig. 12 dargestellte Ultraschallschweißwerkzeug 198 eingebracht.

Das Ultraschallschweißwerkzeug 198 umfasst eine Sonotrode 200 und einen der Sonotrode 200 gegenüberliegenden Amboss 202.

Die Baugruppe 100 wird so auf den Amboss 202 aufgelegt, dass die Anlagefläche 122 des Crimpelements 118 auf einer Auflagefläche 204 des Ambosses 202 zu liegen kommt.

Anschließend wird die Sonotrode 200 so an die Baugruppe 100 herangeführt, dass eine sich in einer Längsrichtung 206 der Sonotrode 200 erstreckende Kontaktfläche 208 der Sonotrode 200 in Kontakt mit der offenen Seite 124 des Crimpelements 118 kommt.

Dabei ist vorzugsweise die Längsrichtung 206 der Kontaktfläche 208 der Sonotrode 200 im Wesentlichen parallel zur Querrichtung 132 des Crimpelements 118 ausgerichtet, so dass sich die Sonotrode 200 quer über die Vertiefung 134 zwischen den Randbereichen 126a und 126b des Crimpelements 118 hinweg erstreckt.

Mittels der Sonotrode 200 wird der Ultraschallschweißvorgang an der Baugruppe 100 durchgeführt, durch welchen die Einzelleiter 106 der elektrischen Leitung 102 untereinander und mit der Innenseite des Crimpelements 118 an dem elektrisch leitenden Bauteil 110 durch Reibschweißung verschweißt und somit stoffschlüssig verbunden werden.

Während des Ultraschallschweißvorgangs ist die Anregerichtung der Sonotrode 200 vorzugsweise im Wesentlichen parallel zu der Querrichtung 132 des Crimpelements 118 und/oder im Wesentlichen parallel zu der Längsrichtung 206 der Sonotrode 200 ausgerichtet.

Während des Ultraschallschweißvorgangs werden das Crimpelement 118 und die Einzelleiter 106 durch die Sonotrode 200 mit einem Schweißdruck beaufschlagt.

Der Schweißdruck beträgt vorzugsweise zumindest zeitweise mindestens ungefähr 3 bar, insbesondere mindestens ungefähr 4 bar, beispielsweise mindestens ungefähr 5 bar.

Als besonders günstig hat sich in Versuchen ein Schweißdruck von ungefähr 5 bar erwiesen.

Die Schweißzeit, während welcher der Ultraschallschweißvorgang stattfindet, beträgt vorzugsweise mindestens ungefähr 1,0 Sekunden, insbesondere mindestens ungefähr 1,5 Sekunden, beispielsweise mindestens ungefähr 3 Sekunden.

Vorzugsweise ist die Zielgröße des Ultraschallschweißvorgangs die Endknotenhöhe, das heißt im vorliegenden Fall die Endhöhe des Crimpelements 118.

Die Sonotrode 200 dringt beim Ultraschallschweißvorgang in das Crimpelement 118 ein und verformt dieses. Der Ultraschallschweißvorgang wird so lange fortgesetzt, bis eine vorgegebene Endhöhe des Crimpelements 118 (beispielsweise eine Endhöhe von 7,5 mm bei einer Ausgangshöhe von 9,8 mm) erreicht ist.

Hierdurch ist sichergestellt, dass die Kompaktierung der Einzelleiter 106 und somit auch die Korrosionsbeständigkeit immer gleich gut sind.

Die während des Ultraschallschweißvorgangs über die Sonotrode 200 in die Baugruppe 100 übertragene Schweißenergie beträgt vorzugsweise mindestens ungefähr 3.000 Ws, insbesondere mindestens ungefähr 4.000 Ws, beispielsweise mindestens ungefähr 5.000 Ws, und beispielsweise höchstens ungefähr 7.000 Ws.

Wenn die Zielgröße des Ultraschallschweißvorgangs die Endknotenhöhe ist, ist die eingebrachte Energie eine Resultierende.

Ein Teil der Anregung durch Ultraschall kann verloren gehen, da die Baugruppe 100 mitschwingt.

Durch den Ultraschallschweißvorgang werden die Einzelleiter 106 im Bereich des Crimpelements 118 weiter kompaktiert, das heißt das zwischen den Einzelleitern 106 verbleibende Zwischenraumvolumen der elektrischen Leitung 102 wird durch den Ultraschallschweißvorgang weiter verringert.

Nach Abschluss des Ultraschallschweißvorgangs wird das Ultraschallschweißwerkzeug 198 geöffnet, und die fertiggestellte Baugruppe 100, in welcher die Einzelleiter 106 der elektrischen Leitung 102 sowohl durch Vercrimpung mittels des Crimpelements 118 als auch durch Ultraschallschweißung mit dem elektrisch leitenden Bauteil 110 verbunden sind, wird aus dem Ultraschallschweißwerkzeug 198 entnommen.

Eine in den Fig. 13 bis 16 dargestellte zweite Ausführungsform einer Baugruppe 100 unterscheidet sich von der vorstehend beschriebenen und in den Fig. 1 bis 12 dargestellten Ausführungsform dadurch, dass der abgekantete Bereich 116, über welchen der Kontaktbereich 112 des elektrisch leitenden Bauteils 110 mit dem Schweißbereich 114 verbunden ist, sich längs einer Abkantlinie 210 erstreckt, welche nicht im Wesentlichen parallel zu der Querrichtung 132 des Crimpelements 118 gerichtet ist, wie bei der ersten Ausführungsform, sondern quer zu der Querrichtung 132 des Crimpelements 118 gerichtet ist.

Dabei schließen die Abkantlinie 210 und die Querrichtung 132 des Crimpelements 118 miteinander vorzugsweise einen Winkel von mehr als ungefähr 10°, insbesondere von mehr als ungefähr 20°, ein.

Ferner schließen die Abkantlinie 210 und die Querrichtung 132 des Crimpelements 118 vorzugsweise miteinander einen Winkel von weniger als ungefähr 60°, insbesondere von weniger als ungefähr 45°, ein.

Beispielsweise kann der von der Abkantlinie 210 und der Querrichtung 132 des Crimpelements 118 eingeschlossene Winkel ungefähr 25° betragen.

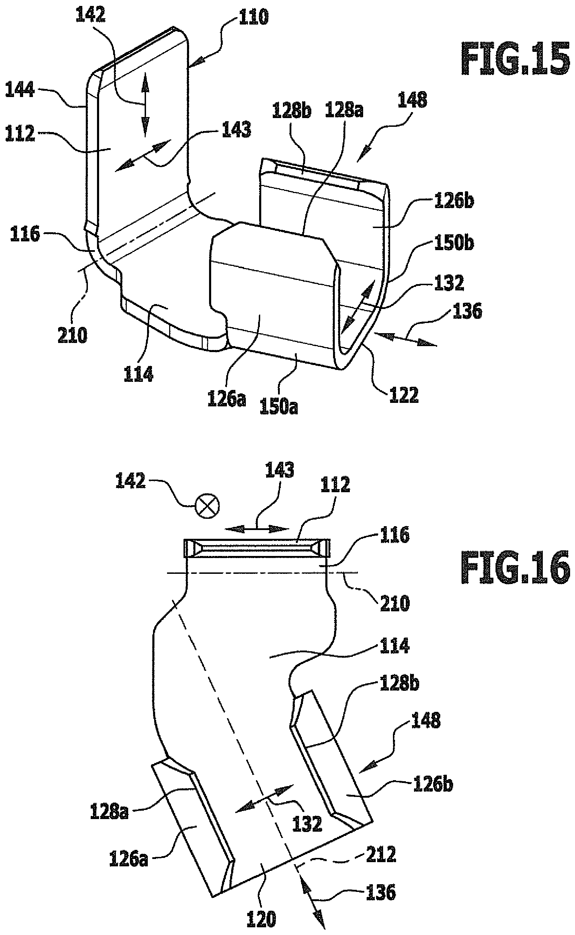

Der Schweißbereich 114 des elektrisch leitenden Bauteils 110 ist bei dieser Ausführungsform somit unsymmetrisch bezüglich einer Längsmittelebene 212 des Crimpelements 118 ausgebildet, welche im Wesentlichen senkrecht zu der Anlagefläche 122 des Crimpelements 118 und im Wesentlichen parallel zu der Längsrichtung 136 des Crimpelements 118 verläuft (siehe Fig. 16).

Hierdurch ist es möglich, die Ausrichtung des Kontaktbereichs 112 des elektrisch leitenden Bauteils 110 unabhängig von der Ausrichtung des Crimpelements 118 zu wählen.

Zur Herstellung der zweiten Ausführungsform der Baugruppe 100 wird wie folgt vorgegangen:
Eine in Fig. 14 dargestellte Bauelement-Vorform 146 wird aus einem geeigneten Ausgangsmaterial, welches vorzugsweise eben ausgebildet ist, beispielsweise aus einem metallischen Blech, herausgetrennt, beispielsweise, vorzugsweise mittels eines Lasers, ausgeschnitten oder ausgestanzt.

Aus der in Fig. 14 dargestellten, im Wesentlichen ebenen Bauelement-Vorform 146 wird das in den Fig. 15 und 16 dargestellte elektrisch leitende Bauteil 110 mit Crimpelement-Vorform 148 dadurch erzeugt, dass die Randbereiche 126a und 126b sowie der Kontaktbereich 112 so aus der Ebene der geschlossenen Seite 120 herausgebogen werden, dass sie sich im Wesentlichen parallel zu der Längsrichtung 136 des späteren Crimpelements 118 und im Wesentlichen senkrecht zur Anlagefläche 122 der geschlossenen Seite 120 erstrecken.

Der Kontaktbereich 112 ist in diesem Zustand über den abgekanteten Bereich 116, der sich längs der Abkantlinie 210 erstreckt, mit dem asymmetrisch ausgebildeten Schweißbereich 114 verbunden.

Das Verbinden der Einzelleiter 106 der elektrischen Leitung 102 mit dem elektrisch leitenden Bauteil 110 durch Vercrimpung und das Verbinden der Einzelleiter 106 der elektrischen Leitung 102 untereinander und mit der Innenseite des Crimpelements 118 an dem elektrisch leitenden Bauteil 110 durch einen Ultraschallschweißvorgang können so erfolgen, wie dies vorstehend im Zusammenhang mit der ersten Ausführungsform der Baugruppe 100 beschrieben worden ist.

Als Ergebnis der Vercrimpung und des anschließenden Ultraschallschweißvorgangs entsteht die in Fig. 13 dargestellte, fertiggestellte Baugruppe 100.

Im Übrigen stimmt die in den Fig. 13 bis 16 dargestellte zweite Ausführungsform der Baugruppe 100 hinsichtlich Aufbau, Funktion, Herstellungsweise und Materialwahl mit der in den Fig. 1 bis 12 dargestellten ersten Ausführungsform überein, auf deren vorstehende Beschreibung insoweit Bezug genommen wird.

Eine in den Fig. 17 bis 22 dargestellte dritte Ausführungsform einer Baugruppe 100 unterscheidet sich von der in den Fig. 1 bis 12 dargestellten ersten Ausführungsform dadurch, dass nicht nur eine, sondern mehrere, insbesondere zwei, elektrische Leitungen 102, nämlich eine erste elektrische Leitung 102a und eine zweite elektrische Leitung 102b, mittels des Crimpelements 118 mit dem elektrisch leitenden Bauteil 110 elektrisch leitend verbunden sind.

Die elektrischen Leitungen 102a und 102b können dabei beispielsweise so ausgebildet sein wie die einzige elektrische Leitung 102 bei der vorstehend beschriebenen ersten Ausführungsform der Baugruppe 100.

Insbesondere können die elektrischen Leitungen 102a und 102b jeweils eine Vielzahl von Litzen oder Einzelleitern 106 und eine elektrisch isolierende Umhüllung 108 umfassen.

Das elektrisch leitende Bauteil 110, mit welchem die elektrischen Leitungen 102a und 102b elektrisch leitend verbunden werden, könnte, ebenso wie bei der ersten Ausführungsform, einstückig mit dem Crimpelement 118 ausgebildet sein und im Wesentlichen so gestaltet sein, wie dies im Zusammenhang mit der ersten Ausführungsform der Baugruppe 100 vorstehend beschrieben worden ist.

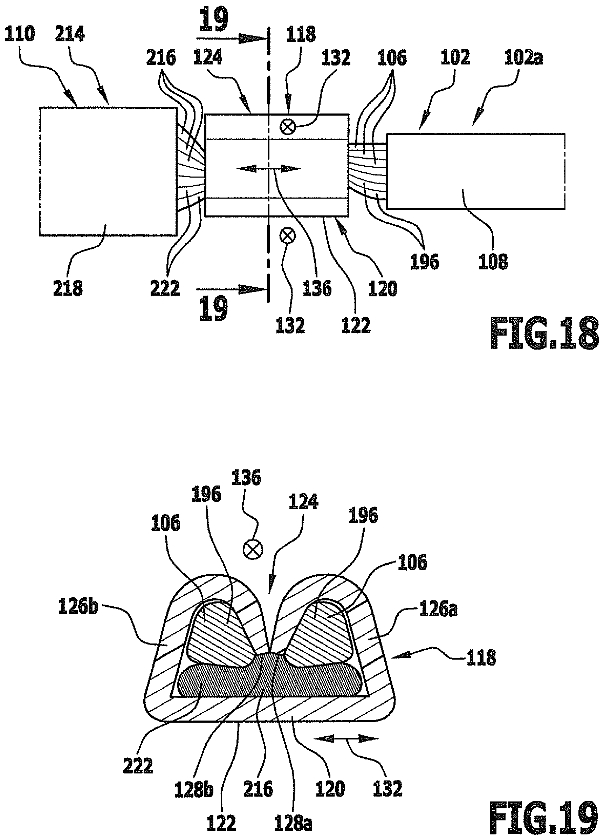

Bei dem in den Fig. 17 bis 22 dargestellten Ausführungsbeispiel ist aber das elektrisch leitende Bauteil 110 separat von dem Crimpelement 118 hergestellt und insbesondere als ein elektrisches Leitungselement 214 ausgebildet, welches mehrere Litzen oder Einzelleiter 216 und eine elektrisch isolierende Umhüllung 218 umfasst (siehe insbesondere Fig. 18).

Wie aus dem Querschnitt der Fig. 19 zu ersehen ist, umschließt das Crimpelement 118 dabei sowohl die Einzelleiter 106 der elektrischen Leitungen 102a und 102b als auch die Einzelleiter 216 des elektrischen Leitungselements 214.

Dabei überlappen sich abisolierte Endbereiche der Einzelleiter 106 der elektrischen Leitungen 102a und 102b einerseits und der Einzelleiter 216 des elektrischen Leitungselements 214 andererseits in Richtung der Längsrichtung 136 des Crimpelements 118.

Das Crimpelement 118 kann im Wesentlichen so ausgebildet sein wie vorstehend im Zusammenhang mit der ersten Ausführungsform der Baugruppe 100 beschrieben, jedoch ohne mit dem elektrisch leitenden Bauteil 110 einstückig ausgebildet zu sein.

Die Einzelleiter 106 der elektrischen Leitungen 102a, 102b einerseits und die Einzelleiter 216 des elektrischen Leitungselements 214 andererseits können grundsätzlich aus im Wesentlichen demselben elektrisch leitfähigen Material, insbesondere aus einem metallischen Material, beispielsweise aus Aluminium, einer Aluminiumlegierung, Kupfer oder einer Kupferlegierung, gebildet sein.

Bei einer besonderen Ausgestaltung dieser Ausführungsform der Baugruppe 100 ist jedoch vorgesehen, dass die Einzelleiter 216 des elektrischen Leitungselements 214 aus einem Material gebildet sind, das von dem Material der Einzelleiter 106 der elektrischen Leitungen 102a, 102b verschieden ist.

Beispielsweise kann vorgesehen sein, dass die Einzelleiter 106 der elektrischen Leitungen 102a, 102b aus Kupfer oder einer Kupferlegierung gebildet sind, während die Einzelleiter 216 des elektrischen Leitungselements 214 aus Aluminium oder einer Aluminiumlegierung gebildet sind.

Umgekehrt könnten auch die Einzelleiter 106 der elektrischen Leitungen 102a, 102b aus Aluminium oder einer Aluminiumlegierung und die Einzelleiter 216 des elektrischen Leitungselements 214 aus Kupfer oder einer Kupferlegierung gebildet sein.

Ferner könnte auch vorgesehen sein, dass die Einzelleiter 106 der beiden elektrischen Leitungen 102a und 102b nicht aus demselben elektrisch leitfähigen Material, sondern aus voneinander verschiedenen elektrisch leitfähigen Materialien gebildet sind.

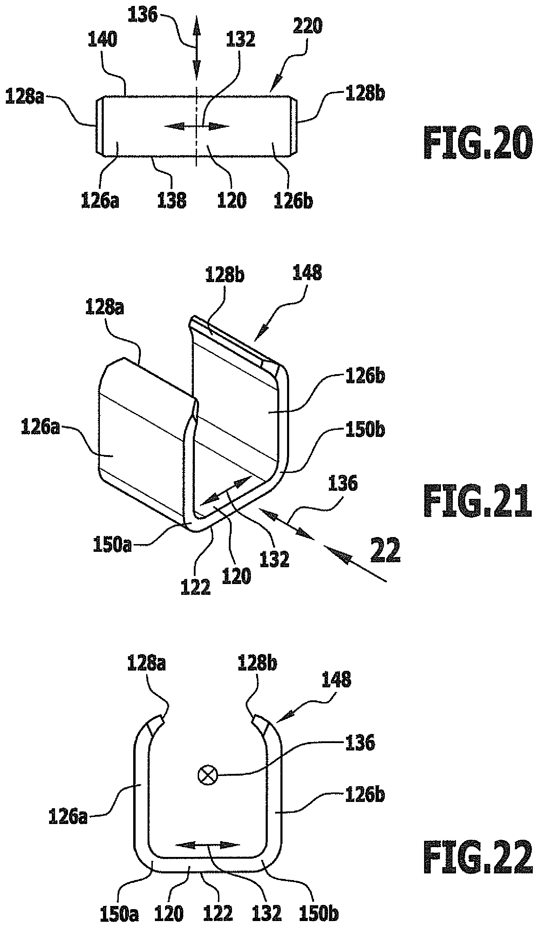

Zur Herstellung der vorstehend beschriebenen und in den Fig. 17 bis 19 dargestellten Baugruppe 100 wird wie folgt vorgegangen:
Eine in Fig. 20 dargestellte Crimpelement-Ausgangsform 220 wird aus einem geeigneten Ausgangsmaterial, welches vorzugsweise eben ausgebildet ist, beispielsweise aus einem metallischen Blech, herausgetrennt, beispielsweise, vorzugsweise mittels eines Lasers, ausgeschnitten oder ausgestanzt.

In dieser Crimpelement-Ausgangsform 220 liegen die geschlossene Seite 120 sowie die Randbereiche 126a und 126b des späteren Crimpelements 118 im Wesentlichen in derselben Ebene, wobei sich die beiden Randbereiche 126a und 126b in einander entgegengesetzten Richtungen längs der Querrichtung 132 des Crimpelements 118 von der geschlossenen Seite 120 weg erstrecken.

Aus der in Fig. 20 dargestellten, im Wesentlichen ebenen Crimpelement-Ausgangsform 220 wird die in den Fig. 21 und 22 dargestellte Crimpelement-Vorform 148 dadurch erzeugt, dass die Randbereiche 126a und 126b so aus der Ebene der geschlossenen Seite 120 herausgebogen werden, dass sie sich im Wesentlichen parallel zu der Längsrichtung 136 und im Wesentlichen senkrecht zur Anlagefläche 122 der geschlossenen Seite 120 des Crimpelements 118 erstrecken.

In dieser Crimpelement-Vorform 148 sind die Randbereiche 126a und 126b über gekrümmte Bereiche 150a, 150b mit der geschlossenen Seite 120 der Crimpelement-Vorform 148 verbunden.

Zum Verbinden der Einzelleiter 106 der elektrischen Leitungen 102a, 102b und der Einzelleiter 216 des elektrischen Leitungselements 214 durch Vercrimpung wird beispielsweise das in Fig. 6 dargestellte Crimp-Werkzeug 152 verwendet.

Für den Crimpvorgang, durch welchen die Einzelleiter 106 der elektrischen Leitungen 102a, 102b durch Vercrimpung unter Bildung des Crimpelements 118 mit den Einzelleitern 216 des elektrischen Leitungselements 214, die einen Bestandteil des elektrisch leitenden Bauteils 110 bilden, verbunden werden, werden die nicht mit der Umhüllung 108 versehenen Endabschnitte 196 der Einzelleiter 106 der elektrischen Leitungen 102a, 102b von der einen Seite der Crimpelement-Vorform 148 und die nicht mit der Umhüllung 218 versehenen Endabschnitte 222 der Einzelleiter 216 des elektrischen Leitungselements 214 von der anderen Seite der Crimpelement-Vorform 148 her in die Crimpelement-Vorform 148, zwischen die aufgestellten Randbereiche 126a und 126b, eingelegt.

Dabei kann beispielsweise vorgesehen sein, dass die Einzelleiter 106 der elektrischen Leitungen 102a und 102b auf der der geschlossenen Seite 120 des Crimpelements 118 abgewandten Seite der Einzelleiter 216 des elektrischen Leitungselements 214 angeordnet sind, wie dies aus dem Querschnitt der Fig. 19 zu ersehen ist.

Mittels des Crimp-Werkzeugs 152 wird die Crimpelement-Vorform 148 plastisch so verformt, dass aus der Crimpelement-Vorform 148 das in den Fig. 17 bis 19 dargestellte Crimpelement 118, beispielsweise mit einem im Wesentlichen B-förmigen Querschnitt, entsteht.

Während der Erzeugung des Crimpelements 118 aus der Crimpelement-Vorform 148 werden die Randbereiche 126a, 126b des Crimpelements 118 um die nicht mit der Umhüllung 108 versehenen Endabschnitte 196 der Einzelleiter 106 der elektrischen Leitungen 102a, 102b herumgebogen und so gegen die Einzelleiter 106 verpresst, dass die vom Crimpelement 118 umschlossenen Endabschnitte 196 der Einzelleiter 106 kompaktiert und kraftschlüssig miteinander verpresst werden.

Zugleich werden bei der Erzeugung des Crimpelements 118 aus der Crimpelement-Vorform 148 die nicht mit der Umhüllung 218 versehenen Endabschnitte 222 der Einzelleiter 216 des elektrischen Leitungselements 214 so gegen die Einzelleiter 106 der elektrischen Leitungen 102a, 102b verpresst, dass die vom Crimpelement 118 umschlossenen Endabschnitte 222 der Einzelleiter 216 kompaktiert und kraftschlüssig miteinander und mit den Einzelleitern 106 der elektrischen Leitungen 102a, 102b verpresst werden.

Durch die Kompaktierung während des Crimpvorgangs wird das zwischen den Einzelleitern 106 verbleibende Zwischenraumvolumen der elektrischen Leitungen 102a, 102b und das zwischen den Einzelleitern 216 verbleibende Zwischenraumvolumen des elektrischen Leitungselements 214 im Bereich des Crimpelements 118 verringert.

Anschließend wird die Baugruppe 100 aus den elektrischen Leitungen 102a und 102b, dem Crimpelement 118 und dem elektrischen Leitungselement 214 aus dem Crimp-Werkzeug 152 entnommen und in ein Ultraschallschweißwerkzeug 198, wie es beispielsweise in Fig. 12 dargestellt ist, eingebracht.

Die Baugruppe 100 wird so auf den Amboss 202 aufgelegt, dass die Anlagefläche 122 des Crimpelements 118 auf der Auflagefläche 204 des Ambosses 202 zu liegen kommt.

Anschließend wird die Sonotrode 200 so an die Baugruppe 100 herangeführt, dass die sich in der Längsrichtung 206 der Sonotrode 200 erstreckende Kontaktfläche 208 der Sonotrode 200 in Kontakt mit der offenen Seite 124 des Crimpelements 118 kommt.

Mittels der Sonotrode 200 wird der Ultraschallschweißvorgang an der Baugruppe 100 durchgeführt, durch welchen die Einzelleiter 106 der elektrischen Leitungen 102a, 102b untereinander und mit den Einzelleitern 216 des elektrischen Leitungselements 214 sowie mit der Innenseite des Crimpelements 118 und die Einzelleiter 216 des elektrischen Leitungselements 214 untereinander, mit den Einzelleitern 106 der elektrischen Leitungen 102a, 102b und mit der Innenseite des Crimpelements 118 durch Reibschweißung verschweißt und somit stoffschlüssig verbunden werden.

Nach Abschluss des Ultraschallschweißvorgangs wird das Ultraschallschweißwerkzeug 198 geöffnet, und die fertiggestellte Baugruppe 100, in welcher die Einzelleiter 106 der elektrischen Leitungen 102a, 102b sowohl durch Vercrimpung mittels des Crimpelements 118 als auch durch Ultraschallschweißung mit den Einzelleitern 216 des elektrischen Leitungselements 214 verbunden sind, wird aus dem Ultraschallschweißwerkzeug 198 entnommen.

Im Übrigen stimmt die in den Fig. 17 bis 22 dargestellte dritte Ausführungsform einer Baugruppe 100 hinsichtlich Aufbau, Funktion, Herstellungsweise und Materialwahl mit der in den Fig. 1 bis 12 dargestellten ersten Ausführungsform überein, auf deren vorstehende Beschreibung insoweit Bezug genommen wird.

## Patentansprüche

1. Verfahren zum Herstellen einer elektrisch leitenden Verbindung zwischen einer elektrischen Leitung (102), die mehrere Einzelleiter (106) umfasst, und einem elektrisch leitenden Bauteil (110), umfassend Folgendes:
- Erzeugen eines die Einzelleiter (106) abschnittsweise umschließenden Crimpelements (118) aus einer Crimpelement-Vorform (148) mittels eines Crimp-Werkzeugs (152);
- Verbinden zumindest eines Teils der Einzelleiter (106) mit dem elektrisch leitenden Bauteil (110) durch einen Ultraschallschweißvorgang;
**dadurch gekennzeichnet,**
**dass** der Ultraschallschweißvorgang mittels einer Sonotrode (200) durchgeführt wird, wobei die Sonotrode (200) so an eine das Crimpelement (118), das elektrisch leitende Bauteil (110) und die elektrische Leitung (102) umfassende Baugruppe (100) herangeführt wird, dass eine sich in einer Längsrichtung (206) der Sonotrode (200) erstreckende Kontaktfläche (208) der Sonotrode (200) in Kontakt mit einer offenen Seite (124) des Crimpelements (118) kommt, und
**dass** die gesamte Querschnittsfläche der Einzelleiter (106) der elektrischen Leitung (102) im Bereich des Crimpelements (118) mehr als 50 mm² beträgt.

2. Verfahren nach Anspruch 1, **dadurch gekennzeichnet, dass** die Einzelleiter (106) sowohl mittels des Crimp-Werkzeugs (152) als auch mittels der Sonotrode (200) kompaktiert werden.

3. Verfahren nach einem der Ansprüche 1 oder 2, **dadurch gekennzeichnet, dass** der Schweißdruck der Sonotrode (200) zumindest zeitweise mindestens ungefähr 3 bar beträgt.

4. Verfahren nach einem der Ansprüche 1 bis 3, **dadurch gekennzeichnet, dass** die Schweißzeit des Ultraschallschweißvorgangs mindestens ungefähr 1,0 Sekunden beträgt.

5. Verfahren nach einem der Ansprüche 1 bis 4, **dadurch gekennzeichnet, dass** die während des Ultraschallschweißvorgangs über die Sonotrode in die Baugruppe übertragene Schweißenergie mindestens ungefähr 3.000 Ws beträgt.

6. Verfahren nach einem der Ansprüche 1 bis 5, **dadurch gekennzeichnet, dass** die Crimpelement-Vorform (148) einstückig mit dem elektrisch leitenden Bauteil (110) ausgebildet ist.

7. Verfahren nach einem der Ansprüche 1 bis 6, **dadurch gekennzeichnet, dass** die Crimpelement-Vorform (148) und/oder das elektrisch leitende Bauteil (110) ein metallisches Material mit einer Zugfestigkeit (Rₘ) von mehr als 250 N/mm² umfasst.

8. Verfahren nach einem der Ansprüche 1 bis 7, **dadurch gekennzeichnet, dass** die Crimpelement-Vorform (148) aus einem Material gebildet ist, welches eine höhere Zugfestigkeit, eine höhere Streckgrenze und/oder einen höheren Elastizitätsmodul aufweist als das Material, aus dem zumindest ein Teil der von dem Crimpelement (118) abschnittsweise umschlossenen Einzelleiter (106, 216) gebildet ist.

9. Verfahren nach einem der Ansprüche 1 bis 8, **dadurch gekennzeichnet, dass** das elektrisch leitende Bauteil (110) einen Schweißbereich (114), an dem zumindest ein Teil der Einzelleiter (106) der elektrischen Leitung (102) festgelegt wird, und einen Kontaktbereich (112) umfasst, wobei der Kontaktbereich (112) über einen abgekanteten Bereich (116) mit dem Schweißbereich (114) verbunden ist.

10. Verfahren nach Anspruch 9, **dadurch gekennzeichnet, dass** der abgekantete Bereich (116) sich längs einer Abkantlinie (210) erstreckt, welche quer zu einer Querrichtung (132) des Crimpelements (118) gerichtet ist.

11. Verfahren nach einem der Ansprüche 1 bis 10, **dadurch gekennzeichnet, dass** mehrere elektrische Leitungen (102a, 102b) mit dem elektrisch leitenden Bauteil (110) elektrisch leitend verbunden werden,
wobei ein die Einzelleiter (106) mehrerer elektrische Leitungen (102a, 102b) abschnittsweise umschließendes Crimpelement (118) aus einer Crimpelement-Vorform (148) erzeugt wird.

12. Verfahren nach einem der Ansprüche 1 bis 11, **dadurch gekennzeichnet, dass** das elektrisch leitende Bauteil (110) ein elektrisches Leitungselement (214) umfasst, welches mehrere Einzelleiter (216) umfasst.

13. Verfahren nach Anspruch 12, **dadurch gekennzeichnet, dass** das Crimpelement (118) die Einzelleiter (216) des elektrischen Leitungselements (214) abschnittsweise umschließt.

14. Verfahren nach einem der Ansprüche 12 oder 13, **dadurch gekennzeichnet, dass** die Einzelleiter (216) des elektrischen Leitungselements (214) aus einem Material gebildet sind, das von dem Material der Einzelleiter (106) der elektrischen Leitung (102a, 102b) verschieden ist.

15. Baugruppe (100), umfassend eine elektrische Leitung (102), die mehrere Einzelleiter (106) umfasst, ein die Einzelleiter (106) abschnittsweise umschließendes Crimpelement (118) und
ein durch Ultraschallschweißung mit zumindest einem Teil der Einzelleiter (106) verbundenes elektrisch leitendes Bauteil (110), wobei das Crimpelement (118) aus einer Crimpelement-Vorform (148) mittels eines Crimp-Werkzeugs (152) erzeugt ist, wobei der Ultraschallschweißvorgang mittels einer Sonotrode (200) erfolgt, welche so an die Baugruppe (100) herangeführt wird, dass eine sich in einer Längsrichtung (206) der Sonotrode (200) erstreckende Kontaktfläche (208) der Sonotrode (200) in Kontakt mit einer offenen Seite (124) des Crimpelements (118) kommt, und
wobei die gesamte Querschnittsfläche der Einzelleiter (106) der elektrischen Leitung (102) im Bereich des Crimpelements (118) mehr als 50 mm² beträgt.

## Claims

1. Method for establishing an electrically conductive connection between an electrical line (102) which comprises a plurality of individual conductors (106) and an electrically conductive component (110), comprising the following:
- producing a crimping element (118) that surrounds the individual conductors (106) sectionally from a crimping element preform (148) by means of a crimping tool (152);
- connecting at least a portion of the individual conductors (106) to the electrically conductive component (110) by an ultrasonic welding process;
**characterized in that**
the ultrasonic welding process is carried out by means of a sonotrode (200), wherein the sonotrode (200) is advanced towards an assembly (100), comprising the crimping element (118), the electrically conductive component (110) and the electrical line (102), in such a way that a contact area (208) of the sonotrode (200) extending in a longitudinal direction (206) of the sonotrode (200) comes into contact with an open side (124) of the crimping element (118), and
**in that** the entire cross-sectional area of the individual conductors (106) of the electrical line (102) amounts to more than 50 mm² in the region of the crimping element (118).

2. Method in accordance with Claim 1, **characterized in that** the individual conductors (106) are compacted by means of the crimping tool (152) and also by means of the sonotrode (200).

3. Method in accordance with either of the Claims 1 or 2, **characterized in that** the welding pressure of the sonotrode (200) amounts to at least approximately 3 bar at least intermittently.

4. Method in accordance with any one of the Claims 1 to 3, **characterized in that** the welding time of the ultrasonic welding process amounts to at least approximately 1.0 seconds.

5. Method in accordance with any one of the Claims 1 to 4, **characterized in that** the welding energy transmitted by the sonotrode into the assembly during the ultrasonic welding process amounts to at least approximately 3,000 Ws.

6. Method in accordance with any one of the Claims 1 to 5, **characterized in that** the crimping element preform (148) is formed in one piece with the electrically conductive component (110).

7. Method in accordance with any one of the Claims 1 to 6, **characterized in that** the crimping element preform (148) and/or the electrically conductive component (110) comprises a metallic material having a tensile strength (Rₘ) of more than 250 N/mm².

8. Method in accordance with any one of the Claims 1 to 7, **characterized in that** the crimping element preform (148) is formed from a material which has a higher tensile strength, a higher yield point and/or a higher modulus of elasticity than the material from which at least a portion of the individual conductors (106, 216) surrounded by the crimping element (118) sectionally is formed.

9. Method in accordance with any one of the Claims 1 to 8, **characterized in that** the electrically conductive component (110) comprises a welding region (114), to which at least a portion of the individual conductors (106) of the electrical line (102) is fixed, and a contact region (112), wherein the contact region (112) is connected to the welding region (114) by a bent region (116).

10. Method in accordance with Claim 9, **characterized in that** the bent region (116) extends along a bending line (210) which is directed transverse to a transverse direction (132) of the crimping element (118).

11. Method in accordance with any one of the Claims 1 to 10, **characterized in that** a plurality of electrical lines (102a, 102b) are connected in electrically conductive manner to the electrically conductive component (110), wherein a crimping element (118) surrounding the individual conductors (106) of the plurality of electrical lines (102a, 102b) sectionally is produced from a crimping element preform (148).

12. Method in accordance with any one of the Claims 1 to 11, **characterized in that** the electrically conductive component (110) comprises an electrical line element (214) which comprises a plurality of individual conductors (216).

13. Method in accordance with Claim 12, **characterized in that** the crimping element (118) surrounds the individual conductors (216) of the electrical line element (214) sectionally.

14. Method in accordance with either of the Claims 12 or 13, **characterized in that** the individual conductors (216) of the electrical line element (214) are formed from a material which is different from the material of the individual conductors (106) of the electrical line (102a, 102b).

15. Assembly (100) comprising
an electrical line (102) that comprises a plurality of individual conductors (106),
a crimping element (118) that surrounds the individual conductors (106) sectionally and
an electrically conductive component (110) that is connected by ultrasonic welding to at least a portion of the individual conductors (106), wherein the crimping element (118) is produced from a crimping element preform (148) by means of a crimping tool (152),
wherein the ultrasonic welding process is carried out by means of a sonotrode (200), which is advanced towards the assembly (100) in such a way that a contact area (208) of the sonotrode (200) extending in a longitudinal direction (206) of the sonotrode (200) comes into contact with an open side (124) of the crimping element (118), and
wherein the entire cross-sectional area of the individual conductors (106) of the electrical line (102) amounts to more than 50 mm² in the region of the crimping element (118).

## Revendications

1. Procédé pour réaliser une liaison électriquement conductrice entre une ligne électrique (102), qui comprend plusieurs conducteurs individuels (106), et un composant (110) électriquement conducteur, comprenant ce qui suit :
- la production d'un élément de sertissage (118) entourant par endroits les conducteurs individuels (106) à partir d'une préforme d'élément de sertissage (148) au moyen d'un outil de sertissage (152) ;
- la liaison d'au moins une partie des conducteurs individuels (106) au composant (110) électriquement conducteur par une opération de soudage par ultrasons ;
**caractérisé en ce**
**que** l'opération de soudage par ultrasons est mise en œuvre au moyen d'une sonotrode (200), dans lequel la sonotrode (200) est rapprochée d'un module (100) comprenant l'élément de sertissage (118), le composant (110) électriquement conducteur et la ligne électrique (102) de telle sorte qu'une surface de contact (208) de la sonotrode (200), s'étendant dans un sens longitudinal (206) de la sonotrode (200), vient en contact avec un côté ouvert (124) de l'élément de sertissage (118), et
**que** la totalité de la surface de section transversale des conducteurs individuels (106) de la ligne électrique (102) dans la zone de l'élément de sertissage (118) est supérieure à 50 mm².

2. Procédé selon la revendication 1, **caractérisé en ce que** les conducteurs individuels (106) sont compactés à la fois au moyen de l'outil de sertissage (152) et au moyen de la sonotrode (200).

3. Procédé selon l'une quelconque des revendications 1 ou 2, **caractérisé en ce que** la pression de soudage de la sonotrode (200) est au moins en partie d'au moins environ 3 bar.

4. Procédé selon l'une quelconque des revendications 1 à 3, **caractérisé en ce que** la durée de soudage de l'opération de soudage par ultrasons est d'au moins environ 1,0 seconde.

5. Procédé selon l'une quelconque des revendications 1 à 4, **caractérisé en ce que** l'énergie de soudage, transmise pendant l'opération de soudage par ultrasons par l'intermédiaire de la sonotrode dans le module, est d'au moins environ 3 000 Ws.

6. Procédé selon l'une quelconque des revendications 1 à 5, **caractérisé en ce que** la préforme d'élément de sertissage (148) est réalisée d'un seul tenant avec le composant (110) électriquement conducteur.

7. Procédé selon l'une quelconque des revendications 1 à 6, **caractérisé en ce que** la préforme d'élément de sertissage (148) et/ou le composant (110) électriquement conducteur comprend un matériau métallique avec une résistance à la traction (Rₘ) supérieure à 250 N/mm².

8. Procédé selon l'une quelconque des revendications 1 à 7, **caractérisé en ce que** la préforme d'élément de sertissage (148) est formée à partir d'un matériau, lequel présente une résistance à la traction plus élevée, une limite d'élasticité plus élevée et/ou un module d'élasticité plus élevé que le matériau, à partir duquel au moins une partie des conducteurs individuels (106, 216) entourés par endroits par l'élément de sertissage (118) est formée.

9. Procédé selon l'une quelconque des revendications 1 à 8, **caractérisé en ce que** le composant (110) électriquement conducteur comprend une zone de soudage (114), au niveau de laquelle au moins une partie des conducteurs individuels (106) de la ligne électrique (102) est fixée, et une zone de contact (112),
dans lequel la zone de contact (112) est reliée par l'intermédiaire d'une zone pliée (116) à la zone de soudage (114).

10. Procédé selon la revendication 9, **caractérisé en ce que** la zone pliée (116) s'étend le long d'une ligne de pliage (210), laquelle est dirigée de manière transversale par rapport à une direction transversale (132) de l'élément de sertissage (118).

11. Procédé selon l'une quelconque des revendications 1 à 10, **caractérisé en ce que** plusieurs lignes (102a, 102b) électriques sont reliées de manière électriquement conductrice au composant (110) électriquement conducteur, dans lequel un élément de sertissage (118) entourant par endroits les conducteurs individuels (106) de plusieurs lignes (102a, 102b) électriques est produit à partir d'une préforme d'élément de sertissage (148).

12. Procédé selon l'une quelconque des revendications 1 à 11, **caractérisé en ce que** le composant (110) électriquement conducteur comprend un élément de conduction (214) électrique, lequel comprend plusieurs conducteurs individuels (216).

13. Procédé selon la revendication 12, **caractérisé en ce que** l'élément de sertissage (118) entoure par endroits les conducteurs individuels (216) de l'élément de conduction (214) électrique.

14. Procédé selon l'une quelconque des revendications 12 ou 13, **caractérisé en ce que** les conducteurs individuels (216) de l'élément de conduction (214) électrique sont formés à partir d'un matériau, qui est différent du matériau des conducteurs individuels (106) de la ligne (102a, 102b) électrique.

15. Module (100) comprenant
une ligne (102) électrique, qui comprend plusieurs conducteurs individuels (106),
un élément de sertissage (118) entourant par endroits les conducteurs individuels (106), et
un composant (110) électriquement conducteur relié par soudage par ultrasons à au moins une partie des conducteurs individuels (106), dans lequel l'élément de sertissage (118) est produit à partir d'une préforme d'élément de sertissage (148) au moyen d'un outil de sertissage (152),
dans lequel l'opération de soudage par ultrasons est effectuée au moyen d'une sonotrode (200), laquelle est rapprochée du module (100) de telle sorte qu'une surface de contact (208) de la sonotrode (200), s'étendant dans un sens longitudinal (206) de la sonotrode (200), vient en contact avec un côté ouvert (124) de l'élément de sertissage (118), et
dans lequel la totalité de la surface de section transversale des conducteurs individuels (106) de la ligne (102) électrique dans la zone de l'élément de sertissage (118) est supérieure à 50 mm².
